**Europäisches Patentamt**

**European Patent Office**

**Office européen des brevets**

(19)

(11) Veröffentlichungsnummer: **0 286 036**

**A2**

(12) # EUROPÄISCHE PATENTANMELDUNG

(21) Anmeldenummer: 88105320.1

(22) Anmeldetag: 01.04.88

(51) Int. Cl.⁴: **C02F 9/00 , C02F 1/24 , C02F 1/04**

(30) Priorität: 09.04.87 DE 3712032

(43) Veröffentlichungstag der Anmeldung:
**12.10.88 Patentblatt 88/41**

(84) Benannte Vertragsstaaten:
**AT CH DE IT LI NL**

(71) Anmelder: **Köppl, Franz, Dipl.-Ing.**
**Im Schönblick 41**
**D-7400 Tübingen(DE)**

Anmelder: **Köppl, Stefan, Dipl.-Ing.**
**Im Schönblick 41**
**D-7400 Tübingen(DE)**

(72) Erfinder: **Köppl, Franz, Dipl.-Ing.**
**Im Schönblick 41**
**D-7400 Tübingen(DE)**
Erfinder: **Köppl, Stefan, Dipl.-Ing.**
**Im Schönblick 41**
**D-7400 Tübingen(DE)**

(74) Vertreter: **Reitzner, Bruno, Dr. et al**
**Patentanwälte Dipl.-Ing. R. Splanemann Dr.**
**B. Reitzner, Dipl.-Ing. K. Baronetzky Tal 13**
**D-8000 München 2(DE)**

(54) **Verfahren und Anlage zur Aufbereitung von gelöste und ungelöste Stoffe enthaltenden industriellen Abwässern.**

(57) Bei einem Verfahren zur Aufbereitung von gelöste und ungelöste Stoff enthaltenden, im Kreislauf geführten industriellen Abwässern durch Flotation der Abwässer und Abtrennung der durch Flotation ausbringbaren Stoffe führt man die Flotation in mindestens zwei Stufen durch. Nach der ersten Flotationsstufe bzw. nach einer der folgenden (bis zur vorletzten) Stufen wird ein Teil des vorgereinigten Regeneratwassers einer ein-oder mehrstufigen Destillation unterzogen, worauf das Destillat mit dem Regeneratabwasser aus der zweiten bzw. der letzten Flotationsstufe vermischt und das Gemisch in den Betrieb zurückgeführt wird. Der Destillationsrückstand wird, gegebenenfalls nach Wiedergewinnung mindestens eines Teil der darin enthaltenen Stoffe, entfernt. Die Flotation kann mindestens teilweise durch Sedimentation ersetzt werden.

Die Erfindung betrifft ein Verfahren und eine Anlage zur Aufbereitung von gelöste und ungelöste Stoffe enthaltenden, im Kreislauf geführten industriellen Abwässern durch Flotation der Abwässer und Abtrennung der durch Flotation ausbringbaren Stoffe.

Bei bekannten Verfahren dieser Gattung bestand das Problem, daß die Abwässer nach der Abtrennung der durch Flotation ausbringbaren Stoffe nicht unbegrenzt in den Betrieb zurückgeführt, d.h. nicht im Kreislauf geführt werden konnten, da sich die Konzentration der gelösten Stoffe bei jedem Durchgang durch den Betrieb erhöhte. Dieser Effekt ist als "Aufsalzung" bekannt und führt dazu, daß die in den Betrieb zurückgeleiteten gereinigten Abwässer nach Erreichung eines bestimmten "Aufsalzungsgrades" mit Frischwasser verdünnt werden müssen. Andererseits muß die der zugesetzten Frischwassermenge entsprechende Menge an Abwasser an die Kanalisation abgegeben werden. Dies hat verschiedene Nachteile.

Einmal ist der Frischwasserverbrauch sehr hoch, was insbesondere in regenarmen Zeiten zu Engpässen führen kann. Zum anderen führt die Ableitung der konzentrierten Abwässer zu einer übermäßigen Belastung der Kanalisation und damit auch der Gewässer, da die gelösten Stoffe zum größten Teil in den Kläranlagen nicht zurückgehalten werden. Schließlich handelt es sich bei den gelösten Stoffen häufig um wertvolle Substanzen, deren Wiedergewinnung anzustreben ist.

Der Erfindung liegt somit die Aufgabe zugrunde, bei einem Verfahren der eingangs definierten Gattung durch Kreislaufführung der Abwässer den Frischwasserbedarf zu senken, die Gewässerbelastung zu vermindern und die gelösten Stoffe, soweit es sich um wertvolle Substanzen handelt, wiederzugewinnen.

Diese Aufgabe wird erfindungsgemäß dadurch gelöst, daß man die Flotation in mindestens zwei Stufen durchführt, nach der ersten Stufe einen Teil des vorgereinigten Regeneratwassers bevorzugt einer ein-oder mehrstufigen Hochdruckdestillation unterzieht, das Destillat mit dem Regeneratabwasser aus der zweiten bzw. der letzten Flotationsstufe vermischt, das Gemisch in den Betrieb zurückführt und den Destillationsrückstand, gegebenenfalls nach Wiedergewinnung mindestens eines Teil der darin enthaltenen Stoffe, entfernt.

Unter industrielle Abwässer fallen erfindungsgemäß beispielsweise die Abwässer von Textilveredelungsbetrieben (z.B. von Färbereien), Textilreinigungsbetrieben, von Betrieben der Erz-und Kohleaufbereitung, von Waschanlagen, von Betrieben der Nahrungs-und Futtermittelindustrie, der metallverarbeitenden Industrie, der Zellstoff-, Papier-, Pappe-, Faserplattenindustrie, von Seife-, Gelatine-, und Leimfabriken und dergl.

Unter dem Begriff "gelöste Stoffe" sind erfindungsgemäß im allgemeinen solche Stoffe zu verstehen, die durch Flotation nicht ausbringbar sind. Hierzu gehören insbesondere Salze, aber auch gelöste organische Verbindungen (z.B. Farbstoffe) und im weiteren Sinn auch kolloidal gelöste anorganische und organische Stoffe. Die organischen Stoffe sind zum Teil biologisch nicht abbaubar und führen, wenn sie in die Kanalisation geleitet werden müssen, zu einer Erhöhung des chemischen Sauerstoffbedarfs (CSB) des Abwassers, was aus Gründen der Gewässerreinhaltung höchst unerwünscht ist.

Unter dem Ausdruck "durch Flotation ausbringbare Stoffe" versteht man erfindungsgemäß einmal den an der Oberfläche des Flotationsbehälters ausgetragenen flotierten Schaum (der z.B. bei der Erz- und Kohleflotation auch als "Konzentrat" bezeichnet wird), und zum anderen das Sediment, das sich am Boden des Flotations behälters absetzt. Im Extremfall, d.h. wenn die Abwasser keine oder nur geringe Mengen an flotierbaren Stoffen enthalten, kann die Flotation entfallen, und die Flotationsbehälter werden nur als Sedimentationsbehälter verwendet. Ferner kann eine Flotation nur im ersten bzw. in einem der ersten Flotationsbehälter durchgeführt werden, während der (oder die) folgende(n) Flotationsbehälter als Sedimentationsbehälter eingesetzt wird (werden).

Unter "Regeneratwasser" versteht man erfindungsgemäß das Abwasser, aus dem die durch Flotation ausbringbaren Stoffe im wesentlichen entfernt sind (wobei der Restgehalt an diesen Stoffen mit steigender Zahl der Flotationsstufen abnimmt), das aber noch die gelösten Stoffe enthält.

Unter "Destillat" versteht man erfindungsgemäß das - bevorzugt -bei der Hochdruckdestillation anfallende kondensierte Wasser, das frei von gelösten Stoffen ist. Das Destillat umfaßt das Brüdenkondensat der einzelnen Druckstufen.

Durch die Vermischung des Destillats mit dem Regeneratabwasser wird der Gehalt an gelösten Stoffen in dem Gemisch, das in den Betrieb zurückgeführt wird, auf dem gewünschten bzw. noch zulässigen Wert gehalten, ohne daß Frischwasser zugeführt und eine der Frischwassermenge äquivalente Menge Abwasser in die Kanalisation abgeleitet werden muß. Die gelösten Stoffe liegen im Destillationsrückstand in einer hochkonzentrierten Form vor und können beispielsweise auf Deponien gelagert werden. Vorzugsweise werden die gelösten Stoffe jedoch wiedergewonnen.

In einigen Fällen treten im Betrieb Wasserverluste auf, beispielsweise in Trocknungsanlagen. Diese Wasserverluste werden im allgemeinen durch Frischwasser ersetzt. Die hierfür benötigte Frischwassermenge ist aber weit geringer als die Frischwassermenge, die bei bekannten Verfahren benötigt wird, um den Gehalt an gelösten Stoffen in den Abwässern auf einem bestimmten zulässigen Wert zu halten.

Das erfindungsgemäße Verfahren ermöglicht auch eine einfache und genaue Einstellung des Gehalts an gelösten Stoffen. Zu diesem Zweck teilt man den Ablauf der ersten Flotationsstufe vorzugsweise so zwischen der Destillation und der folgenden Flotationsstufe auf, daß das Gemisch aus dem Destillat der Destillation und dem Regeneratwasser der letzten Flotationsstufe einen vorbestimmten Gehalt an gelösten Stoffen hat. Üblicherweise beträgt die Konzentration an gelösten Stoffen im Wasserkreislauf maximal das Dreifache der Konzentration der bei einfachem Durchlauf zugeführten Konzentration.

Eine Hochdruckdestillation kann beispielsweise nach dem Verfahren und mit Hilfe der Anlage nach der DE-PS 23 60 491 durchgeführt werden. Bei diesem Verfahren werden stark verunreinigte Abwässer, die in einem Anlageteil, z.B. in einer Färbeanlage in der Textilindustrie, anfallen, aufgearbeitet. In der Anlage sind ferner Wärmeverbraucher vorhanden, die bei Temperaturen von erheblich über 100°C arbeiten. Das Abwasser wird vor Eintritt in einen Verdampfer (gewöhnlich einen Röhrenverdampfer) dicht an seinen Siedepunkt unter jenem Druck erhitzt, welcher einen Dampf gewährleistet, der den Anforderungen der Wärmeverbraucher im Betrieb entspricht. Im Verdampfer wird das Wasser unter einer Volumenvergrößerung (gewöhnlich bis 1 : 1000) verdampft, und der gespannte Dampf wird mit den beim Verdampfungsvorgang entstandenen Schaumanteilen in einen Abscheider geführt. Die Energie des gereinigten Dampfes wird im Betrieb verwendet, und das reine Kondensat des Dampfes, d.h. das Destillat, wird als Brauchwasser wieder eingesetzt.

Bei der Anwendung dieses Verfahrens im Rahmen des erfindungsgemäßen Verfahrens wird der nach der ersten Flotationsstufe abgezweigte Teil des vorgereinigten Regeneratwassers im Verdampfer bevorzugt einer Hochdruckdestillation unterzogen, und das Destillat wird mit dem Regeneratwasser aus der zweiten bzw. der letzten Flotationsstufe vermischt, um die zulässige Konzentration an gelösten Stoffen zu erzielen.

Bei dem Verfahren nach der DE-PS 23 60 491 wurde das gesamte, stark verunreinigte Abwasser einer Hochdruckdestillation unterzogen. Dies hatte gewisse Nachteile, da der Bedarf an Dampf in den betrieblichen Wärmeverbrauchern schwankt und die Hochdruckdestillationsanlage bei geringem Dampfbedarf zuviel Dampf erzeugt. Dieser Nachteil kann mit Hilfe des erfindungsgemäßen Verfahrens behoben werden, da nur ein Teil des Abwassers in die Hochdruckdestillationsanlage geleitet wird, wobei dieser Teil dem jeweils vorhandenen Bedarf an Dampf angepaßt werden kann. Ferner gelangt das in der ersten Flotationsstufe bereits vorgereinigte Regeneratwasser in die Hochdruckdestillationsanlage, so daß diese nicht durch Verunreinigungen, die auf den Wärmeaustauschflächen Verkrustungen bilden könnten, belastet wird.

Auf der anderen Seite kann, wenn ein Teil des vorgereinigten Regeneratwassers nach der ersten Flotationsstufe in die Hochdruck-Destillationsanlage abgezweigt wird, die zweite und gegebenenfalls die folgenden Flotationsstufen kleiner ausgelegt werden, wodurch Investitions- und Betriebskosten eingespart werden.

Nach einer bevorzugten Ausführungsform kann ein Teil der gelösten Stoffe durch Fällungsmittel oder Adsorptionsmittel in durch Flotation ausbringbare Stoffe übergeführt werden. Bei diesen gelösten Stoffen handelt es sich in erster Linie um organische bzw. kolloidal gelöste Stoffe (z.B. Farbstoffe), obwohl auch gelöste Salze durch Fällungsmittel ausgefällt werden können. Dies betrifft auch Salze mit wertvolleren Komponenten, die sich mit Hilfe eines Fällungsmittels durch Flotation einfacher abtrennen lassen als im Destillationsrückstand. Ferner empfiehlt sich eine derartige Abtrennung bei Stoffen die in der Hochdruck-Destillationsanlage korrodierend wirken bzw. die Wärmeaustauschflächen verkrusten. Bei kolloidal gelösten Stoffen verwendet man als Fällungsmittel gewöhnlich Flockungsmittel, wie Salze mehrwertiger Metalle, z.B. Polyaluminiumchlorid, oder aber auch Adsorptionsmittel.

Die durch die Fällungs- und Adsorptionsmittel abgetrennten Stoffe können in allen Flotationsstufen entweder als Schaum oder als Sediment ausgetragen werden.

Ferner können die Abwässer in allen Flotationsstufen mit Chemikalien behandelt werden, um Korrosionen in der Hochdruck-Destillationsanlage zu vermeiden. So können beispielsweise saure Abwässer durch Zusatz von Alkali neutralisiert werden.

Falls die im Destillationsrückstand enthaltenen Stoffe wirtschaftlich verwertbar sind, bzw. zu Problemen führen, wenn der Destillationsrückstand auf einer Deponie abgelagert wird, so werden diese Stoffe wiedergewonnen oder unschädlich gemacht. Zu diesem Zweck kann der Destillationsrückstand filtriert werden, um unlösliche Stoffe abzutrennen. Die gelösten Stoffe, z.B. die Salze, einschließlich der Flockungsmittel, werden vorzugsweise durch Auskristallisieren aus dem Destillationsrückstand wiedergewonnen. Der Destillationsrückstand kann auch durch weiteres Eindampfen aufkonzentriert werden, wenn der Feststoffgehalt für das Auskristallisieren der gelösten Stoffe noch zu niedrig ist. Das beim Eindampfen erhaltene Destillat kann mit dem Destillat aus der Hochdruckdestillation vermischt werden.

Enthält der Destillationsrückstand brennbare organische Substanzen, so können diese verbrannt werden, beispielsweise indem der Destillationsrückstand in den zum Beheizen der Hochdruck-Destillationsanlage verwendeten Brenner eingedüst wird. Hierbei fallen die unverbrennbaren Bestandteile in fester Form an und können in dieser Form entweder deponiert oder für den erneuten Einsatz im Betrieb wiedergewonnen werden.

In entsprechender Weise kann man den Flotationsschlamm verbrennen und die unverbrennbaren Stoffe gegebenenfalls wiedergewinnen.

Nach einer Abwandlung des erfindungsgemäßen Verfahrens kann die Flotation mindestens teilweise durch Sedimentation ersetzt werden. Dies gilt dann, wenn die zu behandelnden Abwässer keine oder nur geringe Mengen an flotierbaren Substanzen enthalten.

Gegenstand der Erfindung ist auch eine Anlage zur Durchführung des Verfahrens, die gekennzeichnet ist durch

(A) eine mit einer aus dem Betrieb führenden Abwasserzuleitung und einer Regeneratwasserableitung versehenen ersten Flotationsstufe;

(B) mindestens eine weitere Flotationsstufe, von der die zweite über die Regeneratwasserableitung mit der ersten Flotationsstufe und jede folgende jeweils mit der Regeneratwasserableitung der vorausgehenden Flotationsstufe verbunden ist;

(C) eine ein-oder mehrstufige bevorzugt im Hochdruckbereich arbeitende Destillationsanlage, enthaltend

(C1) eine Regeneratwasser-Eingangsleitung, die mit der Regeneratwasser-Ableitung der ersten Flotationstufe verbunden ist,

(C2) eine Destillat-Ableitung, die mit der in den Betrieb führenden Regeneratwasser-Ableitung der zweiten bzw. der letzten Flotationsstufe verbunden ist; und

(C3) eine Destillationsrückstands-Ableitung und

(D) eine mit der Destillationsrückstands-Ableitung verbundene Einrichtung zur Wiedergewinnung der in den Abwässern gelösten Stoffe.

Nach einer Abwandlung der erfindungsgemäßen Anlage können die Flotationsstufen mindestens teilweise durch Sedimentationsstufen ersetzt bzw. in diese umgewandelt werden. Die Anlage kann also sehr flexibel den jeweils zu behandelnden Abwässern angepaßt werden.

Die Erfindung ist nachstehend anhand einer Abwasseraufbereitungsanlage für einen Färbereibetrieb erläutert, da die aus einem derartigen Betrieb kommenden Abwässer die unterschiedlichsten Verunreinigungen (anorganische Salze, Farbstoffe, Beizmittel, organische Schlichten usw.) enthalten können. Die Aufbereitungsanlage ist natürlich auch für alle vorstehend genannten Anwendungsgebiete geeignet, die mit Flotationsprozessen arbeiten, bei denen die Abwässer gelöste Stoffe enthalten, die durch Flotation allein nicht aus dem Abwasser entfernt werden können und die bei einer Rückführung des Regeneratwassers stören würden.

In dem beigefügten Verfahrensschema ist mit 2 ein textilverarbeitender Betrieb (Färberei) angedeutet, der über eine Abwasserleitung 4 eine Abwassermenge von 60 m³/h abgibt. Dem Abwasser werden beispielsweise 30 kg/h $Na_2SO_4$ zugeführt, das zum besseren Aufziehen der Farbstoffe auf die Textilfaser in der Farbflotte enthalten war. Die $Na_2SO_4$-Konzentration beträgt also etwa 0,5 g/Liter im einfachen Durchgang. Durch die Aufsalzung im Kreislauf (mehrmaliger Durchgang) erhöht sich der Salzgehalt auf 1,5 g/l. Ferner können im Abwasser Kochsalz, Farbstoffe und organische Substanzen, insbesondere Schlichten, enthalten sein, die kolloidal gelöst sind. Die organischen Verunreinigungen werden gewöhnlich durch den chemischen Sauerstoffbedarf (CSB) erfaßt, der im vorliegenden Beispiel auf etwa 3,3 % zurückgeht. Im Färbereibetrieb entstehen ferner Wasserverluste durch Verdampfung der Farbflotte in den Trocknern in Höhe von etwa 6 m³/h. Diese Verluste sind durch die Dampfabzugsleitung 6 angedeutet.

Das Abwasser gelangt durch die Abwasserzuleitung 4 in die erste Flotationsstufe 8. An der Oberfläche des Flotationsbehälters wird der Flotationsschlamm (Konzentrat) durch die Schaumableitung 10 abgeführt. Am Boden des Flotationsbehälters setzt sich das Sediment ab, das durch die Sedimentableitung 12 abgeführt wird. Bei bestimmten Abwässern, die keine oder nur geringe Mengen an flotierbaren Stoffen enthalten, dienen die Flotationsbehälter lediglich als Sedimentationsbehälter, bzw. es wird nur der erste Behälter als Flotationsbehälter verwendet, wobei die Schaumableitungen 10 und/oder 22 stillgelegt weren oder aber auch entfallen können. Das vorgereinigte Regeneratwasser wird durch die Regeneratwasserableitung 14 abgeführt. Diese teilt sich in die Leitung 16, die zur Hochdruck-Destillationsanlage 18 führt, und in die Leitung 20, die in die zweite Flotationsstufe 22 führt. Das Mengenverhältnis des durch die Leitungen 16 bzw. 20 fließenden vorgereinigten Regeneratwassers kann innerhalb weiter Grenzen geregelt werden (durch die Ventile 24 und 26 angedeutet). Im vorliegenden Beispiel fließen 20 m³/h mit 30 kg/h $Na_2SO_4$ durch die Leitung 16 und 40 m³/h mit 60 kg/h $Na_2SO_4$ durch die Leitung 20. In der zweiten Flotationsstufe 22 folgt eine weitere Reinigung des Regeneratwassers, wobei der Schaum (sofern noch vorhanden) durch die Schaumableitung 28 (die sich mit der Schaumableitung 10 vereinigt) und das Sediment durch die Sedimentableitung 30 (die sich mit der Sedimentableitung 12 vereinigt) ausgetragen wird. Das Sediment wird durch die Leitung 32 abgeführt und in geeigneter Weise deponiert. Der Flotationsschaum aus den beiden Flotationsstufen wird durch die Leitung 34 abgeführt und, falls er wirtschaftlich wiedergewinnbare Stoffe enthält, in geeigneter Weise aufgearbeitet, wobei die organischen Bestandteile gegebenenfalls vorher verbrannt werden können.

Das weiter gereinigte Regeneratwasser verläßt die zweite Flotationsstufe 22 durch die Regeneratableitung 36 (40 m³/h).

Statt der zweiten Flotationsstufe 22 können auch mehrere hintereinandergeschaltete Flotations- und/oder Sedimentationsstufen vorgesehen sein, um das Regeneratwasser noch weiter zu reinigen bzw. um durch Zusatz unterschiedlicher Flotationsmittel oder Fällungsmittel andere Schäume bzw. Sedimente als in der ersten bzw. zweiten Flotationsstufe auszubringen. Beispielsweise können in der zweiten Flotationsstufe und in den folgenden Flotationsstufen jeweils unterschiedliche Fällungsoder Flockungsmittel zugesetzt werden.

Die Hochdruck-Destillationsanlage 18, in welcher der aus der Regeneratableitung 16 kommende Teil des vorgereinigten Regeneratwassers verarbeitet wird, entspricht im wesentlichen der Anlage nach der DE-PS 23 60 491. Er enthält aber drei Hochdruck-Verdampferstufen mit einem Temperaturunterschied von 12,5°C zwischen jeder Verdampferstufe. Die erste Verdampferstufe wird mit Hilfe eines Wärmeträgeröls (durch die Spirale 38 angedeutet) beheizt. Hinter jeder Verdampferstufe ist ein Zyklonabscheider angeordnet. Der abgeschiedene Dampf wird durch einen Wärmeaustauscher, der von dem vorgereinigten Regeneratabwasser durchströmt wird, und dann in einen Kondensator geleitet, von dem aus das kondensierte Destillat (gegebenenfalls nach einer weiteren Abkühlung durch indirekten Wärmeaustausch mit dem vorgereinigten Regeneratwasser), in einer Menge von 19 m³/h abgeführt wird. Der Destillationsrückstand, der im letzten Zyklonabscheider abfällt (1 m³/h mit 30 kg/h Na₂SO₄) wird durch die Destillationsrückstand-Ableitung 42 in eine Kristallisationsvorrichtung 44 geleitet, aus der 30 kg/h Na₂SO₄ gewonnen werden (bei 46). Das Restkonzentrat wird über die Leitung 48 (1 m³/h), die sich mit der Leitung 32 vereinigt, zur Deponie abgeführt.

Das Destillat aus der Leitung 40 vereinigt sich mit dem gereinigten Regeneratwasser aus der zweiten bzw. letzten Flotationsstufe und wird in den Betrieb 2 zurückgeführt.

Die im Kreislauf entstandenen Wasserverluste (durch die Dampfabzugsleitung 6 angedeutet) werden durch Zufuhr von Frischwasser 7 m³/h) durch die Leitung 50 ergänzt. Der Frischwasserbedarf ist also minimal und kann noch weiter gesenkt werden, wenn die Verdampfungsverluste im Betrieb gesenkt werden, etwa dadurch, daß die Abluft der Trockner durch Kondensatoren geleitet wird.

Der sich einpendelnde Gehalt an gelösten Stoffen des durch die Leitung 52 in den Betrieb 2 zurückgeleiteten Gemisches aus gereinigtem Regeneratwasser, Destillat und Frischwasser (nachstehend der Einfachheit halber "Salzgehalt" genannt), läßt sich leicht durch Ermittlung des "Aufsalzfaktors" errechnen, mit dem der Salzgehalt des gereinigten Regeneratwassers zu multipli zieren ist.

$$f = \frac{1}{1 - Recyclinganteil}$$

Wenn beispielsweise ein Drittel des Abwassers durch die Hochdruck-Destillationsanlage 18 und zwei Drittel durch die Flotationsstufen 8 und 22 gehen, so errechnet sich der Faktor

$$f = \frac{1}{1 - 2/3} = 3$$

Die Salzfracht erhöht sich also bei einer Anfangskonzentration von 0,5 g/Liter auf 1,5 g/Liter.

Ein Vorteil der Kombination von Hochdruck-Destillationsanlage und Flotation besteht also darin, daß die Hochdruck-Destillationsanlage nur noch für ein Drittel der Abwassermenge ausgelegt werden muß, wodurch der Wärmeeinsatz und damit auch die Wärmeabgabe auf ein Drittel absinkt.

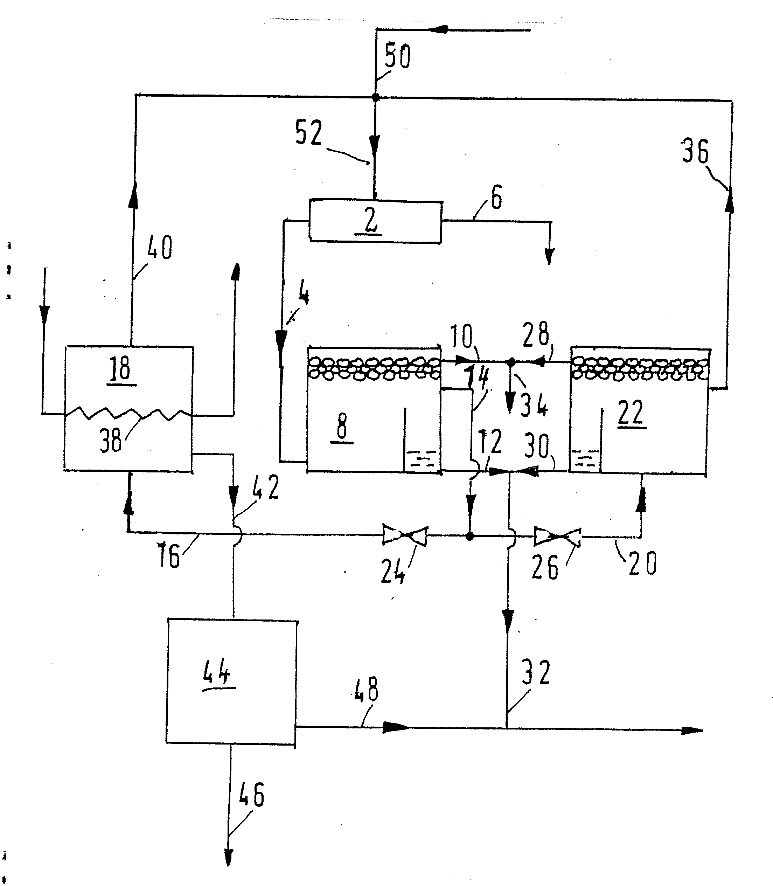

**Ansprüche**

1. Verfahren zur Aufbereitung von gelöste und ungelöste Stoffe enthaltenden, im Kreislauf geführten industriellen Abwässern durch Flotation der Abwässer und Abtrennung der durch Flotation ausbringbaren Stoffe, dadurch gekennzeichnet, daß man die Flotation in mindestens zwei Stufen durchführt, nach der ersten Stufe bzw. nach einer der folgenden (bis zur vorletzten) Stufen einen Teil des vorgereinigten Regeneratwassers einer ein-oder mehrstufigen Destillation unterzieht, das Destillat mit dem Regeneratabwasser aus der zweiten bzw. der letzten Flotationsstufe vermischt, das Gemisch in den Betrieb zurückführt und den Destillationsrückstand, gegebenenfalls nach Wiedergewinnung mindestens eines Teils der darin enthaltenen Stoffe, entfernt.

2. Verfahren nach Anspruch 1, dadurch gekennzeichnet, daß man den Ablauf der ersten Flotationsstufe so zwischen der Destillation und der folgenden Flotationsstufe aufteilt, daß das Gemisch aus dem Destillat und dem Regeneratwasser der letzten Flotationsstufe einen vorbestimmten Gehalt an gelösten Stoffen hat.

3. Verfahren nach Anspruch 1 oder 2, dadurch gekennzeichnet, daß die Konzentration an gelösten Stoffen in dem Gemisch aus Regeneratwasser und Destillat im Kreislauf ein bestimmbares Vielfaches der bei einfachem Durchlauf erreichten Konzentration beträgt.

4. Verfahren nach einem der Ansprüche 1 bis 3, dadurch gekenn zeichnet, daß man einen Teil der gelösten Stoffe durch Fällungsmittel oder Adsorptionsmittel in durch Flotation ausbringbare Stoffe überführt.

5. Verfahren nach einem der Ansprüche 1 bis 4, dadurch gekennzeichnet, daß man die gelösten Stoffe durch Auskristallisieren aus dem Destillationsrückstand bzw. aus dem durch weiteres Eindampfen aufkonzentrierten Destillationsrückstand wiedergewinnt.

6. Verfahren nach einem der Ansprüche 1 bis 4, dadurch gekennzeichnet, daß man den Flotationsschlamm verbrennt und die unverbrennbaren Stoffe gegebenenfalls wiedergewinnt.

7. Abwandlung des Verfahrens nach einem der Ansprüche 1 bis 6, dadurch gekennzeichnet, daß man die Flotation mindestens teilweise durch Sedimentation ersetzt.

8. Anlage zur Durchführung des Verfahrens nach einem der Ansprüche 1 bis 7, gekennzeichnet durch:

(A) eine mit einer aus dem Betrieb (2) führenden Abwasserzuleitung (4) und einer Regeneratwasserableitung (14) versehenen ersten Flotationsstufe (8);

(B) mindestens eine weitere Flotationsstufe (22), von der die zweite Flotationsstufe über die Regeneratwasserableitung (14) mit der ersten Flotationsstufe (8) und jede folgende jeweils mit der Regeneratwasserableitung der vorausgehenden Flotationsstufe verbunden ist,

(C) eine ein-oder mehrstufige Destillationsanlage (18), enthaltend

(C1) eine Regeneratwasserzuleitung (16), die mit der Regeneratwasserableitung (14) der ersten Flotationstufe (8) verbunden ist

(C2) eine Destillat-Ableitung (40), die mit der in den Betrieb (2) führenden Regeneratwasser-Ableitung (36) der zweiten bzw. der letzten Flotationsstufe (22) verbunden ist, und

(C3) eine Destillationsrückstands-Ableitung (42); und

(D) eine mit der Destillationsrückstands-Ableitung verbundene Einrichtung (44) zur Wiedergewinnung der in den Abwässern gelösten Stoffe.

9. Anlage nach Anspruch 8, dadurch gekennzeichnet, daß die Einrichtung (44) zur Wiedergewinnung der in den Abwässern gelösten Stoffe eine Kristallisationsvorrichtung darstellt.

10. Anlage nach Anspruch 8, gekennzeichnet durch eine Einrichtung zum Verbrennen des in der (den) Flotationsstufe(n) (8, 22), abgetrennten Flotationsschlammes und/oder des Konzentrates aus der Destillationsanlage.

11. Abwandlung der Anlage nach einem der Ansprüche 8 bis 10, dadurch gekennzeichnet, daß die Flotationsstufen mindestens teilweise durch Sedimentationsstufen ersetzt bzw. in diese umwandelbar sind.